Europäisches Patentamt

European Patent Office

Office européen des brevets

(11) Veröffentlichungsnummer: **0 586 910 B1**

(12) **EUROPÄISCHE PATENTSCHRIFT**

(45) Veröffentlichungstag der Patentschrift: **08.11.95**

(51) Int. Cl.6: **C01B 25/027**

(21) Anmeldenummer: **93112863.1**

(22) Anmeldetag: **11.08.93**

(54) **Verfahren und Anlage zum Entfernen von Blei, Cadmium und Zink aus Stäuben.**

(30) Priorität: **10.09.92 DE 4230223**

(43) Veröffentlichungstag der Anmeldung:
**16.03.94 Patentblatt 94/11**

(45) Bekanntmachung des Hinweises auf die
Patenterteilung:
**08.11.95 Patentblatt 95/45**

(84) Benannte Vertragsstaaten:
**BE DE FR GB IT NL**

(56) Entgegenhaltungen:
**EP-A- 0 266 597**
**EP-A- 0 354 338**
**US-A- 4 537 756**

(73) Patentinhaber: **HOECHST AKTIENGESELL-SCHAFT**

**D-65926 Frankfurt am Main (DE)**

(72) Erfinder: **Vermaire, Dirk Cornelis, Dr.**
**van Kleffenslaan 161**
**NL-4334 HE Middelburg (NL)**
Erfinder: **Damman, Bernardus Johannes**
**Oude Vlissingseweg 63**
**NL-4336 AB Middelburg (NL)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zum Entfernen von Blei, Cadmium und Zink aus im Elektroabscheider bei der elektrothermischen Herstellung von gelben Phosphor anfallenden Stäuben sowie eine Anlage zu seiner Durchführung.

Aus dem elektrothermischen Reduktionsofen zur Herstellung von gelben Phosphor wird ein staubhaltiges, im wesentlichen aus dampfförmigem Phosphor und Kohlenmonoxid bestehendes Gasgemisch abgezogen, welches vor der Kondensation des in ihm enthaltenden Phosphors einen Elektroabscheider durchströmt, in dem die Stäube zurückgehalten werden. Diese Stäube, welche etwa 20 Gewichts% $P_2O_5$, als weitere Hauptbestandteile $SiO_2$ und $CaO$ sowie als Nebenbestandteile etwa 1,0 bis 1,5 Gewichts% Blei, etwa 0,3 bis 0,5 Gewichts% Cadmium und 5 bis 6 Gewichts% Zink enthalten, werden mit Wasser zu einer Staubmaische angerührt. Aus dieser Staubmaische können zusammen mit Tonmaische als Bindemittel aus Rohphosphat auf einer Granuliereinrichtung Formlinge hergestellt werden, welche anschließend auf einer Sintereinrichtung zu Phosphatpellets geglüht werden.

In der US-A-4 537 756 wird vorgeschlagen, zur Entfernung von Zink, Cadmium und anderen Schwermetallen gemahlene Phosphorofenschlacke gemeinsam mit Staubmaische auf einer Granuliereinrichtung zu Formlingen zu verarbeiten, wobei die Formlinge nach Trocknen und Calcinieren Pellets liefern, die die genannten Metalle enthalten und die auf eine Deponie gegeben werden.

Nachteilig ist insbesondere bei dem zuletzt genannten Verfahren, daß damit Zink, Cadmium und die anderen in den Pellets enthaltenen Schwermetalle keiner weiteren Nutzung zugeführt werden. Gelegentlich weisen die Stäube vom Rohphosphat herrührende Radioaktivität auf (Blei 210 und Abkömmlinge).

Es ist daher Aufgabe der vorliegenden Erfindung, ein Verfahren zum Entfernen von Blei, Cadmium und Zink aus Stäuben, die bei der elektrothermischen Herstellung von gelbem Phosphor im Elektroabscheider anfallen, sowie eine Anlage zu seiner Durchführung anzugeben, bei welchen die genannten Metalle derartig aus den Stäuben extrahiert werden, daß sie aus dem Extrakt gewonnen werden können und der verbleibende Rückstand praktisch frei von diesen Metallen ist.

Das wird erfindungsgemäß dadurch erreicht, daß man die Stäube mit Phosphorsäure mit einem Gehalt von mindestens 25 Gewichts-% $P_2O_5$ bei Temperaturen oberhalb von 60 °C in einer belüfteten Reaktionszone aufschließt und daß man die Aufschlußlösung in einer Filterzone in einen im wesentlichen blei-, cadmium- und zinkfreien festen Rückstand und in eine Blei, Cadmium und Zink gelöst enthaltende Phosphorsäure auftrennt.

Das Verfahren gemäß der Erfindung kann weiterhin wahlweise auch noch dadurch ausgestaltet sein, daß

a) durch Aufschluß von Rohphosphat mit Mineralsäuren hergestellte Phosphorsäure verwendet ist;

b) die verwendete Phosphorsäure ein molares Na/P-Verhältnis von weniger als 0,32 aufweist;

c) durch Verbrennen von gelben Phosphor hergestellte Phosphorsäure verwendet ist;

d) die verwendete Phosphorsäure ein molares Na/P-Verhältnis von weniger als 0,21 aufweist;

e) die Phosphorsäure einen $P_2O_5$-Gehalt von 27 bis 32 Gewichts-%, vorzugsweise von 30 bis 32 Gewichts-% aufweist;

f) die Verweilzeit in der Reaktionszone 16 bis 20 Stunden beträgt;

g) die Verweilzeit in der Reaktionszone 22 bis 26 Stunden beträgt;

h) eine solche Menge Luft in die Reaktionszone eingeleitet wird, daß darin ein Redoxpotential von mindestens + 300 mV, vorzugsweise von mindestens + 400 mV aufrechterhalten wird.

Schließlich kann eine Anlage zur Durchführung des erfindungsgemäßen Verfahrens gekennzeichnet sein durch mindestens einen mit einer Zuführungsleitung für Phosphorsäure, mit einer Zuführungsleitung für in Wasser aufgeschlämmte Stäube, mit einer Überlaufleitung, mit einer Heizeinrichtung, mit einem Lufteintrittsrohr sowie mit einem Rührer versehenen Reaktor; einen Zwischenbehälter, in welchen mindestens eine der Überlaufleitungen einmündet; ein Eindickfilter, welches mit dem Zwischenbehälter strömungsmäßig verbunden ist; einen Anmaischbehälter, welcher mit dem Eindickfilter strömungsmäßig verbunden ist; ein Bandfilter, welches mit Dickschlamm aus dem Anmaischbehälter beaufschlagbar ist; und einen Sammelbehälter, in welchen der Klarlauf vom Eindickfilter einläuft.

Beim Verfahren gemäß der Erfindung wird das den Neutralisationsgrad der Phosphorsäure angebende molare Na/P-Verhältnis dadurch ermittelt, daß man das Filtrat des Aufschlusses nach Verdünnen mit Wasser mit eingestellter Natronlauge bis zu den Umschlagpunkten der molaren Na/P-Verhältnisse von 1 (pH = 4,5) und 2 (pH = 9,5) titriert. Die Errechnung des Na/P-Verhältnisses erfolgt nach der Formel

$$Na/P = 1 - \frac{\text{Laugenverbrauch bis pH 4,5}}{\text{Laugenverbrauch von pH 4,5 bis pH 9,5}}$$

Beim erfindungsgemäßen Verfahren wird das Redoxpotential in der Reaktionszone mit Hilfe einer Meßbrücke ermittelt, welche aus einer Platin-Elektrode, einem Millivoltmeter und einer Ag/AgCl/KCl3M-Referenzelektrode besteht.

Beim Verfahren gemäß der Erfindung werden von den in den Stäuben enthaltenen $P_2O_5$ bis 95 Gewichts-%, von Blei und Cadmium bis 98 Gewichts-% und von Zink bis 95 Gewichts-% aufgeschlossen, wobei die hohe Aufschlußrate beim Zink jedoch nur erreicht wird, wenn in der Reaktionszone durch Belüftung (oder gegebenenfalls durch Zusatz von $H_2O_2$) ein hohes positives Redoxpotential aufrechterhalten wird. Durch das Einblasen von Luft in die Reaktionszone werden gleichzeitig Reste von elementarem Phosphor oxidiert und aus aufgeschlossenen Sulfiden stammender Schwefelwasserstoff ausgeblasen.

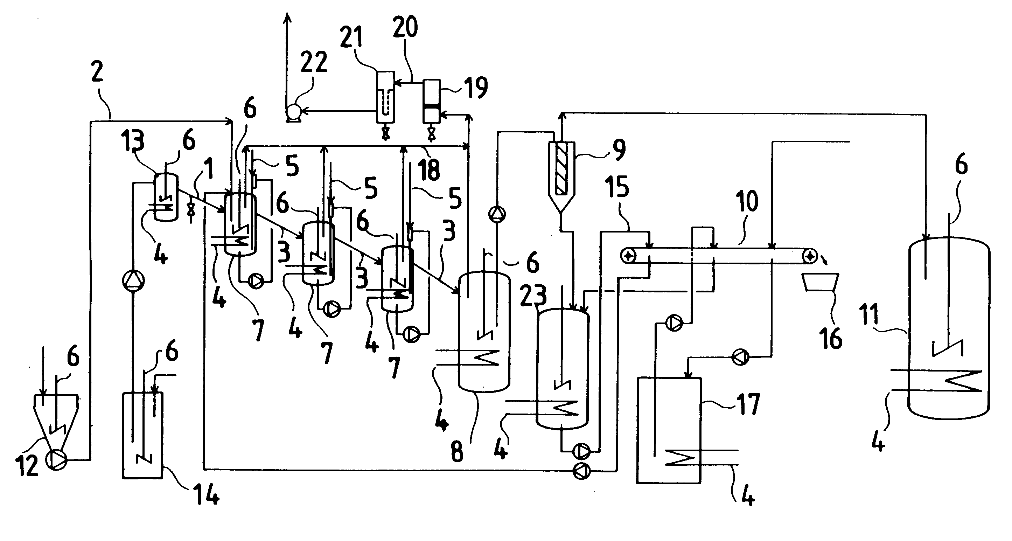

In der beigefügten Zeichnung ist eine Anlage zur Durchführung des erfindungsgemäßen Verfahrens schematisch dargestellt.

In Wasser aufgeschlämmte Stäube aus Elektroabscheidern der elektrothermischen Herstellung von gelben Phosphor werden aus einem mit Rührer 6 versehenen Vorratsbehälter 12 über eine Zuführungsleitung 2 in einen ersten Reaktor 7 eingetragen, in welchen auch eine Zuführungsleitung 1 für Phosphorsäure einmündet, die mit einem Vorwärmer 13 und einer Vorlage 14 in strömungsmäßiger Verbindung steht. Die Reaktoren 7 sind weiterhin mit einer Überlaufleitung 3, einer Heizeinrichtung 4, einem Lufteintrittsrohr 5 und einem Rührer 6 versehen.

Die Überlaufleitung 3 des dritten Reaktors 7 mündet in einen mit einer Heizeinrichtung 4 und einem Rührer 6 versehenen Zwischenbehälter 8 ein, welcher seinerseits mit einem Eindickfilter 9 in strömungsmäßiger Verbindung steht. Der aus dem Eindickfilter 9 austretende pastenartige Kuchen gelangt in ein mit Rührer 6 und Heizeinrichtung 4 versehenes Anmaischgefäß 23, in welchem er mit Phosphorsäure und Filterwaschwasser zu einem Dickschlamm verarbeitet wird. Dieser Dickschlamm wird über ein Zuführungsrohr 15 auf ein Bandfilter 10 aufgegeben, wobei der Feststoff in einen Rückstandsbehälter 16 abgeworfen wird, während das Filtrat in den ersten Reaktor 7 rückgeführt und Waschwasser vom Bandfilter 10 dem Anmaischbehälter 23 zugeführt wird. Auf das Bandfilter 10 aufgegebenes Frischwasser wird in einem mit Heizeinrichtung 4 versehenen Waschbehälter 17 gesammelt und erneut zum Waschen auf das Bandfilter 10 aufgegeben. Schließlich wird der Klarlauf aus dem Eindickfilter 9 einem mit Heizeinrichtung 4 und Rührer 6 versehenen Sammelbehälter 11 zugeführt.

Durch Einblasen von Luft in die Reaktoren 7 erfolgt eine beträchtliche Wasserverdampfung, durch welche die Bildung von Phosphorsäurenebeln verursacht wird. Daher sind die Reaktoren 7 und der Zwischenbehälter 8 strömungsmäßig mit einer Brüdenleitung 18 verbunden, welche in einen Tropfenabscheider 19 einmündet. Vom Kopf des Tropfenabscheiders 19 führt eine Leitung 20 zu einem Nebelabscheider 21, der seinerseits strömungsmäßig mit der Saugseite eines Gebläses 22 verbunden ist.

Beispiel 1

Aus der Vorlage 14 (vgl. die Figur) wurde durch Verbrennen von gelben Phosphor hergestellte und auf etwa 42 Gewichts-% $H_3PO_4$ ($\triangleq$ 30,4 Gewichts-% $P_2O_5$) verdünnte Phosphorsäure (Na/P-Wert: 0) in den Vorwärmer 13 gepumpt und daraus 5,5 l/h in den ersten Reaktor 7 dosiert. Gleichzeitig wurden aus dem Vorratsbehälter 12 1,4 l/h Staubmaische (spezifisches Gewicht: 1,29 g/l; Feststoffgehalt: 39 Gewichts-%) in den ersten Reaktor 7 dosiert. Nach entsprechender Betriebszeit waren auch die beiden weiteren Reaktoren 7 gefüllt und schließlich erfolgte der Überlauf mit 6,0 l/h in den Zwischenbehälter 8. Damit betrug die Verweilzeit in den Reaktoren 7 etwa 24 Stunden.

Am Boden der Reaktoren 7 befanden sich Lufteintrittsrohre 5, mit deren Hilfe über Polypropylenfritten sehr feinverteilte Luft in einer Menge von jeweils 6 bis 10 l/min in die Reaktoren 7 eingebracht wurde.

Durch das Einblasen der Luft erfolgte die Verdampfung von etwa 1 l/h Wasser; der Wasserdampf wurde über die Brüdenleitung 18 dem Tropfenabscheider 19 und dem Nebelabscheider 21 zugeführt und vom Gebläse 22 abgezogen.

Der Inhalt des Vorwärmers 13, der drei Reaktoren 7 und des Zwischenbehälters 8 wurde durch ihre Heizeinrichtungen 4 auf einer Betriebstemperatur von 80 °C gehalten.

Durch die Anwendung von Vakuum bei der Filtration verdampft aus dem Filtrat eine kleine Menge Wasser, wodurch dessen Temperatur erniedrigt wird. Wenn die Filtrattemperatur 50 °C unterschreitet, fällt unter Trübung des Filtrats Bleihydrogenphosphat ($PbHPO_4$) aus, welches sich durch anschließende Temperaturerhöhung äußerst langsam wieder auflöst. Deswegen und wegen des geringen Feststoffgehaltes der Aufschlußsuspension wurde ein Eindickfilter verwendet.

Aus dem Zwischenbehälter 8 wurden 60 l/h Aufschlußsuspension (spezifisches Gewicht: 1,30 g/l; Na/P-Wert: 0,20; Feststoffgehalt: 35 g/kg) auf das Eindickfilter 9 (Kerzendruckfilter der Fa. Dr. Müller Apparatebau AG, Männedorf (Schweiz) mit 0,16 m$^2$ filtrierender Oberfläche; Druck bis 3 bar ansteigend) aufgegeben. Der Durchsatz betrug 375 l/m$^2$h und der resultierende pastenartige Filterkuchen war 8 bis 13 mm dick und enthielt ca. 35 % Feststoff. Der pastenartige Filterkuchen wurde im Anmaischbehälter 23 mit Waschwasser vom Bandfilter 10, Phosphorsäure sowie einer geringen Menge Wasserstoffperoxid unter Bildung eines Dickschlammes mit einem Feststoffgehalt von 15 Gewichts-% versetzt, wobei die flüssige Phase des Dickschlammes 17 Gewichts-% $P_2O_5$ und einen Na/P-Wert von 0,16 aufwies. Der Dickschlamm wurde auf dem Bandfilter 10 (Vakuumbandfilter der Fa. PANNEVIS mit 0,1 m$^2$ filtrierender Oberfläche und zwei Waschzonen; Bandgeschwindigkeit: 8 m/h; Unterdruck; 0,7 bar) filtriert, wobei das Filtrat, welches frei von Bleihydrogenphosphat-Ausfällungen war, in den ersten Reaktor 7 zurückgeführt wurde. Der Filterkuchen war etwa 8 mm dick, enthielt 0,2 Gewichts-% lösliches $P_2O_5$ und wies nach Pressen einen Feststoffgehalt von etwa 45 Gewichts-% auf.

Pro kg Staub, welcher als Staubmaische eingesetzt wurde, entstanden 0,44 kg Aufschlußrückstand (berechnet als Trockensubstanz).

Die erreichte Entfernung von $P_2O_5$, Pb, Cd und Zn aus dem Staub zeigt die <u>Tabelle</u>:

|  | Aufschlußrückstand [Gewichts-%] | Aufschlußrückstand x 0,44 [Gewichts-%] | Staub [Gewichts-%] | Differenz % |
|---|---|---|---|---|
| $SiO_2$ | 71,0 | 31,2 | 31,0 | + 0,6 |
| $P_2O_5$ | 2,5 | 1,1 | 20,0 | - 95 |
| CaO | 6,2 | 2,7 | 13,0 | - 79 |
| Pb | 0,0254 | 0,011 | 1,04 | - 99 |
| Cd | 0,0023 | 0,001 | 0,36 | - 99 |
| Zn | 0,12 | 0,053 | 3,29 | - 98 |

Beispiel 2

Aus der Vorlage 14 (vgl. die Figur) wurde durch Aufschluß von Rohphosphat mit Mineralsäure gewonnene und auf etwa 42 Gewichts-% $H_3PO_4$ (≙ 30,4 Gewichts-% $P_2O_5$) verdünnte Phosphorsäure mit einem Na/P-Wert von 0,17 in den Vorwärmer 13 gepumpt und daraus 8,0 l/h in den ersten Reaktor 7 dosiert. Gleichzeitig wurden aus dem Vorratsbehälter 12 1,3 l/h Staubmaische (spezifisches Gewicht: 1,29 g/l; Feststoffgehalt: 39 Gewichts-%) in den ersten Reaktor 7 dosiert. Nach entsprechender Betriebszeit waren auch die beiden weiteren Reaktoren 7 gefüllt und schließlich erfolgte der Überlauf mit 7,5 l/h in den Zwischenbehälter 8. Damit betrug die Verweilzeit in den Reaktoren 7 etwa 20 Stunden. Am Boden der Reaktoren 7 befanden sich Lufteintrittsrohre 5, mit deren Hilfe über Polypropylenfritten sehr feinverteilte Luft in einer Menge von jeweils 6 bis 10 l/min in die Reaktoren 7 eingebracht wurde.

Durch das Einblasen der Luft erfolgte die Verdampfung von etwa 1 l/h Wasser; der Wasserdampf wurde über die Brüdenleitung 18 dem Tropfenabscheider 19 und dem Nebelabscheider 21 zugeführt und vom Gebläse 22 abgezogen.

Der Inhalt des Vorwärmers 13, der drei Reaktoren 7 und des Zwischenbehälters 8 wurde durch ihre Heizeinrichtungen 4 auf einer Betriebstemperatur von 80 °C gehalten.

Durch die Anwendung von Vakuum bei der Filtration verdampft aus dem Filtrat eine kleine Menge Wasser, wodurch dessen Temperatur erniedrigt wird. Wenn die Filtrattemperatur 50 °C unterschreitet, fällt unter Trübung des Filtrats Bleihydrogenphosphat ($PbHPO_4$) aus, welches sich durch anschließende Temperaturerhöhung äußerst langsam wieder auflöst. Deswegen und wegen des geringen Feststoffgehaltes der Aufschlußsuspension wurde ein Eindickfilter verwendet.

Aus dem Zwischenbehälter 8 wurden 60 l/h Aufschlußsuspension (spezifisches Gewicht: 1,32 g/l; Na/P-Wert: 0,30; Feststoffgehalt: 25 g/kg) auf das Eindickfilter 9 (Kerzendruckfilter der Fa. Dr. Müller Apparatebau AG, Männedorf (Schweiz) mit 0,16 m$^2$ filtrierender Oberfläche; Druck bis 3 bar ansteigend) aufgegeben. Der Durchsatz betrug 375 l/m$^2$h und der resultierende pastenartige Filterkuchen war 8 bis 13 mm dick und enthielt ca. 33 % Feststoff. Der pastenartige Filterkuchen wurde im Anmaischbehälter 23 mit Waschwasser vom Bandfilter 10, Phosphorsäure sowie einer geringen Menge Wasserstoffperoxid unter Bildung eines Dickschlammes mit einem Feststoffgehalt von 15 Gewichts-% versetzt, wobei die flüssige Phase des

Dickschlammes 17 Gewichts-% $P_2O_5$ und einen Na/P-Wert von 0,26 aufwies. Der Dickschlamm wurde auf dem Bandfilter 10 (Vakuumbandfilter der Fa. PANNEVIS mit 0,1 m² filtrierender Oberfläche und zwei Waschzonen; Bandgeschwindigkeit: 8 m/h; Unterdruck; 0,7 bar) filtriert, wobei das Filtrat, welches frei von Bleihydrogenphosphat-Ausfällungen war, in den ersten Reaktor 7 zurückgeführt wurde. Der Filterkuchen war etwa 8 mm dick, enthielt 0,2 Gewichts-% lösliches $P_2O_5$ und wies nach Pressen einen Feststoffgehalt von etwa 45 Gewichts-% auf.

Pro kg Staub, welcher als Staubmaische eingesetzt wurde, entstanden 0,44 kg Aufschlußrückstand (berechnet als Trockensubstanz).

Die erreichte Entfernung von $P_2O_5$, Pb, Cd und Zn aus dem Staub zeigt die Tabelle:

|  | Aufschlußrückstand [Gewichts-%] | Aufschlußrückstand x 0,44 [Gewichts-%] | Staub [Gewichts-%] | Differenz % |
|---|---|---|---|---|
| $SiO_2$ | 68,0 | 29,9 | 28,6 | + 4,6 |
| $P_2O_5$ | 2,7 | 1,2 | 27,3 | - 96 |
| CaO | 6,0 | 2,6 | 11,3 | - 78 |
| Pb | 0,083 | 0,037 | 1,1 | - 97 |
| Cd | 0,007 | 0,003 | 0,39 | - 99 |
| Zn | 0,42 | 0,18 | 3,85 | - 95 |

## Patentansprüche

1.  Verfahren zum Entfernen von Blei, Cadmium und Zink aus im Elektroabscheider bei der elektrothermischen Herstellung von gelbem Phosphor anfallenden Stäuben, dadurch gekennzeichnet, daß man die Stäube mit Phosphorsäure mit einem Gehalt von mindestens 25 Gewichts-% $P_2O_5$ bei Temperaturen oberhalb von 60 °C in einer belüfteten Reaktionszone aufschließt und daß man die Aufschlußlösung in einer Filterzone in einen im wesentlichen blei-, cadmium- und zinkfreien festen Rückstand und in eine Blei, Cadmium und Zink gelöst enthaltende Phosphorsäure auftrennt.

2.  Verfahren nach Anspruch 1, dadurch gekennzeichnet, daß durch Aufschluß von Rohphosphat mit Mineralsäuren hergestellte Phosphorsäure verwendet ist.

3.  Verfahren nach Anspruch 2, dadurch gekennzeichnet, daß die verwendete Phosphorsäure ein molares Na/P-Verhältnis von weniger als 0,32 aufweist.

4.  Verfahren nach Anspruch 1, dadurch gekennzeichnet, daß durch Verbrennen von gelbem Phosphor hergestellte Phosphorsäure verwendet ist.

5.  Verfahren nach Anspruch 4, dadurch gekennzeichnet, daß die verwendete Phosphorsäure ein molares Na/P-Verhältnis von weniger als 0,21 aufweist.

6.  Verfahren nach mindestens einem der Ansprüche 1 bis 5, dadurch gekennzeichnet, daß die Phosphorsäure einen $P_2O_5$-Gehalt von 27 bis 32 Gewichts-%, vorzugsweise von 30 bis 32 Gewichts-% aufweist.

7.  Verfahren nach mindestens einem der Ansprüche 1 bis 3 und 6, dadurch gekennzeichnet, daß die Verweilzeit in der Reaktionszone 16 bis 20 Stunden beträgt.

8.  Verfahren nach mindestens einem der Ansprüche 1 und 4 bis 6, dadurch gekennzeichnet, daß die Verweilzeit in der Reaktionszone 22 bis 26 Stunden beträgt.

9.  Verfahren nach mindestens einem der Ansprüche 1 bis 8, dadurch gekennzeichnet, daß eine solche Menge Luft in die Reaktionszone eingeleitet wird, daß darin ein Redoxpotential von mindestens + 300 mV, vorzugsweise von mindestens + 400 mV aufrechterhalten wird.

10. Anlage zur Durchführung des Verfahrens nach mindestens einem der Ansprüche 1 bis 9, gekennzeichnet durch mindestens einen mit einer Zuführungsleitung für Phosphorsäure (1), mit einer Zuführungsleitung für in Wasser aufgeschlämmte Stäube (2), mit einer Überlaufleitung (3), mit einer Heizeinrichtung (4), mit einem Lufteintrittsrohr (5) sowie mit einem Rührer (6) versehenen Reaktor (7); einen Zwischenbehälter (8), in welchen mindestens eine der Überlaufleitungen (3) einmündet; ein Eindickfilter (9), welches mit dem Zwischenbehälter (8) strömungsmäßig verbunden ist; einen Anmaischbehälter (23), welcher mit dem Eindickfilter (9) strömungsmäßig verbunden ist; ein Bandfilter (10), welches mit Dickschlamm aus dem Anmaischbehälter (23) beaufschlagbar ist; und einen Sammelbehälter (11), in welchen der Klarlauf vom Eindickfilter (9) einläuft.

**Claims**

1. A process for removing lead, cadmium and zinc from dusts produced in the electrostatic precipitator in the electrothermal production of yellow phosphorus, which comprises digesting the dusts using phosphoric acid having a content of at least 25% by weight of $P_2O_5$ at temperatures above 60°C in a ventilated reaction zone and separating the digest solution in a filter zone into an essentially lead-, cadmium- and zinc-free solid residue and into a phosphoric acid containing dissolved lead, cadmium and zinc.

2. The process as claimed in claim 1, wherein phosphoric acid produced by digestion of crude phosphate by mineral acids is used.

3. The process as claimed in claim 2, wherein the phosphoric acid used has a molar Na/P ratio of less than 0.32.

4. The process as claimed in claim 1, wherein phosphoric acid produced by combustion of yellow phosphorus is used.

5. The process as claimed in claim 4, wherein the phosphoric acid used has a molar Na/P ratio of less than 0.21.

6. The process as claimed in at least one of claims 1 to 5, wherein the phosphoric acid has a $P_2O_5$ content of 27 to 32% by weight, preferably 30 to 32% by weight.

7. The process as claimed in at least one of claims 1 to 3 and 6, wherein the residence time in the reaction zone is 16 to 20 hours.

8. The process as claimed in at least one of claims 1 and 4 to 6, wherein the residence time in the reaction zone is 22 to 26 hours.

9. The process as claimed in at least one of claims 1 to 8, wherein an amount of air is introduced into the reaction zone such that a redox potential of at least + 300 mV, preferably of at least + 400 mV, is maintained therein.

10. A plant for carrying out the process as claimed in at least one of claims 1 to 9, comprising at least one reactor (7) furnished with a feedline for phosphoric acid (1), with a feedline for dusts (2) slurried in water, with an overflow line (3), with a heating device (4), with an air inlet pipe (5) and with a stirrer (6); an intermediate vessel (8) into which at least one of the overflow lines (3) opens out; a thickening filter (9) which is flow-connected to the intermediate vessel (8); a mashing vessel (23) which is flow-connected to the thickening filter (9); a belt filter (10) which can be charged with thick sludge from the mashing vessel (23); and a collecting vessel (11) into which runs the clear flow from the thickening filter (9).

**Revendications**

1. Procédé d'élimination du plomb, du cadmium et du zinc des poussières retenues dans le séparateur électrostatique lors de la production électrothermique de phosphore jaune, caractérisé en ce qu'on dissout les poussières avec de l'acide phosphorique qui a une teneur d'au moins 25 % en poids de $P_2O_5$ à des températures supérieures à 60°C dans une zone de réaction aérée et qu'on fractionne la solution de dissolution dans une zone de filtration en un résidu solide essentiellement exempt de plomb, de cadmium et de zinc et en de l'acide phosphorique contenant à l'état dissous du plomb, du cadmium et du zinc.

2. Procédé selon la revendication 1, caractérisé en ce qu'on utilise de l'acide phosphorique préparé par l'attaque de phosphate brut par des acides minéraux.

3. Procédé selon la revendication 2, caractérisé en ce que l'acide phosphorique utilisé présente un rapport molaire Na/P inférieur à 0,32.

4. Procédé selon la revendication 1, caractérisé en ce qu'on utilise de l'acide phosphorique préparé par combustion de phosphore jaune.

5. Procédé selon la revendication 4, caractérisé en ce que l'acide phosphorique utilisé présente un rapport molaire Na/P inférieur à 0,21.

6. Procédé selon au moins l'une des revendications 1 à 5, caractérisé en ce que l'acide phosphorique présente une teneur en $P_2O_5$ de 27 à 32 % en poids, de préférence de 30 à 32 à en poids.

7. Procédé selon au moins l'une des revendications 1 à 3 et 6, caractérisé en ce que le temps de séjour dans la zone de réaction est de 16 à 20 h.

8. Procédé selon au moins l'une des revendications 1 et 4 à 6, caractérisé en ce que le temps de séjour dans la zone de réaction est de 22 à 26 h.

9. Procédé selon au moins l'une des revendications 1 à 8, caractérisé en ce qu'on introduit une quantité d'air dans la zone de réaction telle qu'on y maintient un potentiel rédox d'au moins + 300 mV, de préférence d'au moins + 400 mV.

10. Unité de réalisation du procédé selon au moins l'une des revendications 1 à 9, caractérisée par au moins un réacteur équipé d'une conduite d'alimentation en acide phosphorique (1), d'une conduite d'alimentation des poussières (2) empâtées dans de l'eau, d'un trop-plein (3), d'un dispositif de chauffage (4), d'un tube d'introduction d'air (5) ainsi que d'un agitateur (6) ; une cuve intermédiaire (8) dans laquelle débouche au moins l'un des trop-pleins (3) ; un filtre épaississeur (9) qui est relié à la cuve intermédiaire (8) en écoulement ; une cuve d'empâtage (23) qui est reliée en écoulement au filtre épaississeur (9) ; un filtre à bande (10), auquel on peut amener la boue épaisse en provenance de la cuve d'empâtage (23) ; et un réservoir (11) dans lequel s'écoule l'eau claire du filtre épaississeur (9).